# EUROPEAN PATENT APPLICATION

(11) **EP 2 942 985 A1**
(43) Date of publication of application: **11.11.2015**
(21) Application number: 14305667.9
(22) Date of filing: 07.05.2014
(51) Int. Cl.: H04W 4/00, H04W 8/18, H04W 12/08

(54) **Method of managing subscription in a secure token**

(71) Applicant: Gemalto SA, 92190 Meudon (FR)
(72) Inventor: Halle, David, 13705 La Ciotat (FR); Duprez, Jérôme, 13705 La Ciotat (FR); Montanari, Patrick, 13705 La Ciotat (FR); Jourdain, Clément, 13705 La Ciotat (FR); Dao, Frédéric, 13705 La Ciotat (FR); Pico, Richard, 13705 La Ciotat (FR)

(57) **Abstract**

The invention is a method for managing subscription in a UICC that comprises two profiles and that is able to handle only one active profile at a time. The profiles are administrated by an administration server. The method comprises the steps:
- when an activation of a profile is needed, checking if this profile is authorized to store data administrated by a trusted server distinct from the administration server and if the current profile contains an application installed by the trusted server,
- in case of successful checking, performing in atomic way both the transfer of the application from the current profile to the new profile and the activation of the new profile.

## Description

### (Field of the invention)

The present invention relates to methods of managing several subscriptions in a secure token. It relates particularly to methods of managing several subscriptions in a secure token acting as a UICC (Universal Integrated Circuit Card).

### (Background of the invention)

A secure token is either a tamper-resistant physical component able to store data and to provide services in a secure manner or a software component providing a trusted storage area and trusted services. A token may be named secure element. In general, a token has a limited amount of memory, a processor with limited capabilities and is devoid of battery. For instance a UICC is a secure token which embeds SIM applications for telecommunication purposes. A secure token can be installed, fixedly or not, in a terminal, like a mobile phone for example. In some cases, the terminals are constituted by machines that communicate with other machines for M2M (Machine to Machine) applications.

A secure token can be in the format of a smart card, or may be in any other format such as for example but not limited to a packaged chip as described in PCT/SE2008/050380, or any other format. A UICC can be used in mobile terminals in GSM, CDMA or UMTS networks for instance. The UICC ensures network authentication, integrity and security of all kinds of personal data.

It is known to solder or weld a secure token in a host device, in order to get it dependent of this host device. This is done in M2M (Machine to Machine) applications. The same objective is reached when a chip (a secure token) containing a Payment application, SIM or USIM applications and files is contained in the host device. The chip is for example soldered to the mother-board of the host device or machine and constitutes a token called an embedded-secure element (eSE).

A secure token may contain a profile which can include a set of applications, a set of personal data and a set of secret data.

The profile could be linked to a subscription. It may contain network access applications (NAA), payment applications or third party applications providing security for a specific service (e.g. NFC applications).

A secure token can emulate several virtual secure tokens, each one represented as one profile. In such a case, these profiles are also called logical profiles or virtual profiles. An emulated profile is hereinafter called profile. Usually each emulated profile is a software based profile.

Usually, data corresponding to a subscription is managed by an administration server like a Subscription Manager (ASM) that can load a new profile and request a swap to another active profile. A profile may also contain data related to a service which is managed by another server like a Trusted Service Management (TSM) server. In this case, data related to a TSM service is not managed by the Subscription Manager. Thus when an ASM requests a change of current profile which does not contain the same TSM service, the user loses access to the TSM service.

There is a need to avoid loss of access to services managed by an entity different from the entity that manages the subscriptions installed in the token.

### (Summary of the Invention)

An object of the invention is to solve the above mentioned technical problem.

The object of the present invention is a method for managing subscription in a token acting as an UICC and comprising first and second profiles. The token is able to handle only one active profile at a time. The first and second profiles are administrated by a first server. The method comprises the steps:
- when an activation of the second profile is needed, checking if the second profile is authorized to store data administrated by a trusted server distinct from the first server and checking if the first profile contains an application installed by the trusted server.
- in case of successful checking, performing in atomic way both the transfer of the application from the first profile to the second profile and the activation of the second profile.

Advantageously, the checking step may be performed at the first server, in case of successful checking the first server may generate a single swap command requesting both activation of the second profile and transfer of the application from the first profile to the second profile and the first server may send the single swap command to the token.

Advantageously, the first server may be notified of the presence of the application in the first profile.

Advantageously, the first server may generate and send to the token a swap command requesting the activation of the second profile and the checking step may be performed at the token.

Advantageously, the token may comprise more than two profiles and the method may comprise the further steps:
- in case of unsuccessful checking, searching for the profile that was most recently activated and which is authorized to store data administrated by the trusted server and which contains the application,
- in case of successful searching, performing in atomic way both the transfer of the application to the second profile and the activation of the second profile.

Advantageously, the token may send to the trusted server a report message reflecting the actual transfer of the application to the second profile.

Another object of the invention is a token acting as an UICC and able to handle only one active profile at a time and comprising first and second profiles administrated by a first server. The token comprises a discovering module configured to check if said second profile is authorized to store data administrated by a trusted server distinct from the first server and if the first profile contains an application installed by the trusted server. The token also comprises an activating module configured to perform in atomic way both the transfer of the application from the first profile to the second profile and the activation of the second profile only in the case where the checking made by the discovering module is successful.

Advantageously, the token may comprise a notifying module configured to send to the trusted server a report message reflecting the actual transfer of the application to the second profile.

Another object of the invention is a system comprising a first server and a token which acts as an UICC. The token includes first and second profiles and is able to handle only one active profile at a time. The first and second profiles are administrated by the first server. The first server comprises a checking module configured to check if the second profile is authorized to store data administrated by a trusted server distinct from the first server and if said first profile contains an application installed by the trusted server. The first server comprises a generating module configured to generate a single swap command requesting both activation of the second profile and transfer of the application from the first profile to the second profile only in the case where the checking made by the checking module is successful. The token comprises an activating module configured to perform in atomic way both the transfer of the application from the first profile to the second profile and the activation of the second profile by executing the swap command.

Advantageously, the first server may comprise a storing module configured to store parameters reflecting a set of profiles which are authorized to store data administrated by the trusted server.

### (Brief description of the drawings)

Other characteristics and advantages of the present invention will emerge more clearly from a reading of the following description of a number of preferred embodiments of the invention with reference to the corresponding accompanying drawings in which:
- Figure 1 is a first example of a method for managing a swap of subscriptions in a token according to the invention,
- Figure 2 is a second example of a method for managing a swap of subscriptions in a token according to the invention,
- Figure 3 is an example of a system comprising a Subscription Manager and a token according to an example of the invention,
- Figure 4 is an example of the architecture of a token according to the invention,
- Figures 5, 6 and 7 show examples of the state of a token before, after a first swap and after a second swap of current subscription according to the invention.

### (Detailed description of the preferred embodiments)

The invention may apply to any type of token intended to contain several virtual profiles. The token may operate independently or may be coupled to any type of host device able to establish a communication session with the token. For example the host device may be a mobile phone, tablet PC, a vehicle, a meter, a slot machine, a TV, a camera, an ATM, an alert system such as an anti-burglar system, a smoke detector or a computer.

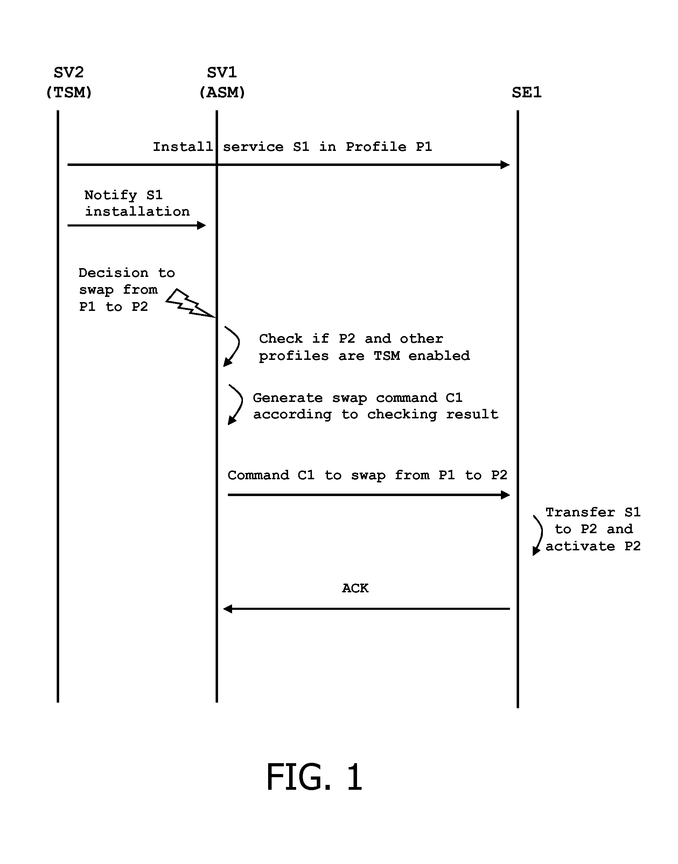

**Figure 1** shows a first example of a method for managing a swap of subscriptions in a token SE1 according to the invention.

The token SE1 is an UICC which comprises two subscription profiles P1 and P2 which are remotely managed by an administration entity SV1. For instance, the administration entity SV1 may be a Subscription Manager (ASM) which is able to load, install and activate a new profile into the token SE1 and which is able to request a swap from the currently active profile to another one. The profiles P1 and P2 can each include a different USIM (Universal Subscriber Identity Module) or ISIM (IP Multimedia Service Identity Module) or CSIM (CDMA SIM).

The profile P1 is assumed to be the current profile in the token SE1. In other words, the profile P1 is the active profile in the token SE1.

A service entity SV2 is able to remotely manage services which are intended to be stored in a profile of the token. For instance, the service entity SV2 may be a Trusted Service Management (TSM) which is able to load, install and activate a new service S1 in a targeted profile. The service entity SV2 remotely manages a set of services for a Service Provider. The service S1 may be a payment application allowing completing payment transactions linked to a specific bank account.

Both profiles P1 and P2 are assumed to be compliant with services coming from the service entity SV2. In other words, both profiles P1 and P2 are assumed to be authorized to contain services managed by the service entity SV2. When the service entity SV2 is a TSM, the profiles P1 and P2 are said "TSM enabled".

In the example of Figure 1, the administration entity SV1 is assumed to have been previously informed that profiles P1 and P2 are "TSM enabled".

At a first step, the service entity SV2 installs and activates the service S1 into the profile P1 of the token SE1. This operation may be carried out through the usual mechanism. For example, the service entity SV2 may send APDUs (Application Protocol Data Unit) of RAM (Remote Application Management) as defined in Global Platform to the token SE1. The secure channels SCPxx defined in Smart Card standards may be used, like SCP80 (0348) over SMS or CAT-TP, SCP81 (PSK-TLS) RAM over http, SCP02 over Proxy (xRoH) or SCP03 over Proxy (xRoH).

At a second step, the service entity SV2 notifies the administration entity SV1 of the installation of the service S1 in the profile P1. The communication between the service entity SV2 and the administration entity SV1 is of server to server communication type. They can use the HTTP (REST, SOAP) protocol, a TCP protocol or a UDP (IP) protocol.

At a third step, the administration entity SV1 makes the decision to active the profile P2. Thus, the administration entity SV1 prepares a request to swap from the profile P1 to the profile P2.

According to the first example of the invention, the administration entity SV1 performs a checking step aiming at determining if one or several services must be transferred to the profile to be activated (i.e. profile P2). The administration entity SV1 can check if the profile P2 is authorized to contain a service managed by the service entity SV2. The administration entity SV1 can check if the current profile (i.e. profile P1) contains a service managed by the service entity SV2.

Note that theses check may be performed in different order and partly executed according to the intermediate results. Advantageously, the administration entity SV1 can also check if deactivated profiles which were previously activate still contain service to be moved. This additional check may be performed by parsing an historic log of the current profiles.

Then the administration entity SV1 generates a swap command C1 based on the final result of the previous checking. If there is no service to transfer, the command C1 is generated as a usual swap command. If there is at least one service to transfer, the administration entity SV1 generates a swap command C1 comprising an identifier of the service(s) to be transferred, an indication of the area where the service to move is currently stored and an indication of the area where the service must be transferred.

In the example of Figure 1, the checking step allows the entity SV1 to know that the profile P1 contains a service S1 to transfer and that the profile P2 can receive the service S1.

At a fourth step, the administration entity SV1 sends the swap command C1 to the token SE1.

In more details, the administration entity SV1 can establish a SCP03 (Secure Channel Protocol 03 as defined by Global Platform Specification v2.2 - Amendments D) secure channel via "Initial_update" and "External_Authentication" and send an enhanced Set_Status command with the following parameters: the AID if the profile to activate (i.e. an identifier of P2), an identifier of the Security Domain currently hosting the service S1 and an identifier of the Security Domain where the service S1 must be moved. The command C1 is sent through the SCP 03 secure channel.

According to this example of the invention, a unique swap command C1 is sent to the token SE1 for triggering both the transfer of the service S1 and the activation of the profile P2. Thus in this example of the invention, the administration entity SV1 is specifically configured to generate the unique swap command C1 and the token SE1 is specifically configured to execute the unique swap command C1.

At receipt of the swap command C1, the token SE1 executes the command C1 in atomic manner. In other words, the token SE1 transfers the service S1, deactivates the profile P1 and activates the profile P2 as a unique operation so that if an error occurs the token comes back to the state it had before executing the swap command C1.

The service S1 can be implemented as multiple files or containers comprising applicative data, secret data, user data, and execution codes for example. All these files are removed from the profile P1 and shifted to the profile P2.

At a fifth step, the token SE1 may send an acknowledgement message ACK to the administration entity SV1 for reflecting the result of the execution of the swap command C1.

The notification of the second step may be replaced with any appropriate information sharing mechanisms. For example, the administration entity SV1 may have been notified in an earlier step for a batch of tokens. Alternatively, the administration entity SV1 may retrieve this piece of information by requesting the token SE1 or another online machine which is aware of the state of the profiles embedded in the token SE1.

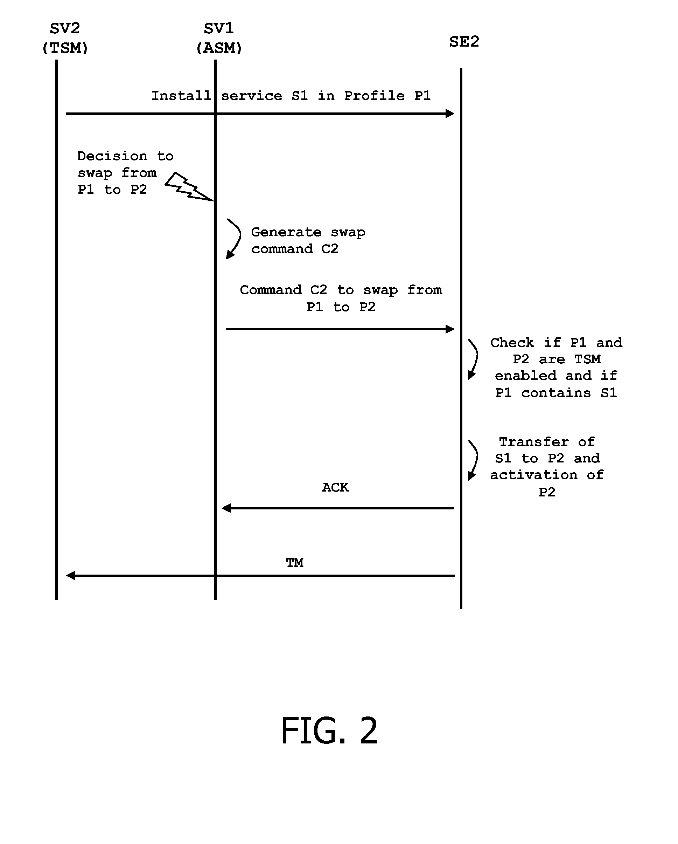

**Figure 2** shows a second example of a method for managing a swap of subscriptions in a token SE2 according to the invention.

The token SE2 is an UICC which comprises three subscription profiles P1, P2 and P3 that are remotely managed by an administration entity SV1. The administration entity SV1 may be able to load, install and activate a new profile and able to request a swap from the currently active profile to another selected profile. The three profiles can each include a different USIM, ISIM, CSIM or equivalent subscription rights.

The first profile P1 is assumed to be the current (e.g. the active) profile in the token SE1.

A service entity SV2 similar to the one of the Figure 1 manages a service S1 intended to be installed in a profile hosted in the token SE2. The service S1 may be a transport application allowing to access vehicles of a transport network.

Both profiles P1 and P2 are assumed to be compliant with services coming from the service entity SV2.

At a first step, the service entity SV2 installs and activates the service S1 into the profile P1.

At a second step, the administration entity SV1 makes the decision to active the profile P2.

At a third step, the administration entity SV1 generates a conventional swap command C2 requesting the swap from the profile P1 to the profile P2. Then the administration entity SV1 sends the swap command C2 to the token SE1.

At a fourth step, on receipt of the swap command C2, the token SE2 performs a checking step aiming at determining if one or several services must be transferred to the profile to be activated. The token SE2 can check if the profiles P1 and P2 are authorized to contain a service remotely managed by the service entity SV2. The token SE2 can check if the current profile contains a service remotely managed by the service entity SV2.

The checking step may be performed based on a discovery sub-step where the token SE2 scans all its profiles for identifying the services to be moved.

These checks may be performed in different order and partly executed according to their intermediate results.

Then the token SE2 performs the swap operation based on the final result of the previous checking step. If there is no service to transfer, the profile P2 is activated in a conventional way. If there is at least one service to transfer, the token SE2 transfers the service then actives the profile in a single internal transaction executed in atomic manner.

In the example of Figure 2, the checking step allows the token SE2 to know that the profile P1 contains a service S1 to transfer and that the profile P2 can receive the service S1.

At a fifth step, the token SE1 deactivates the profile P1, transfers the service S1 and activates the profile P2 as a unique operation so that if an error occurs the token comes back to the state it had before starting this operation.

According to this example of the invention, the administration entity SV1 is a conventional one and the token SE1 is specifically configured to run the checking step at receipt of the swap command C2 and to transfer the found services.

Optionally, at a sixth step, the token SE1 can send an acknowledgement message ACK to the administration entity SV1 for reflecting the result of the execution of the swap command C2.

If necessary, at a seventh step, the token SE1 can send a report message TM to the service entity SV2 for reflecting the actual transfer of the service S1 from the profile P1 to the profile P2. Alternatively, the administration entity SV1 may send the report message TM to the service entity SV2.

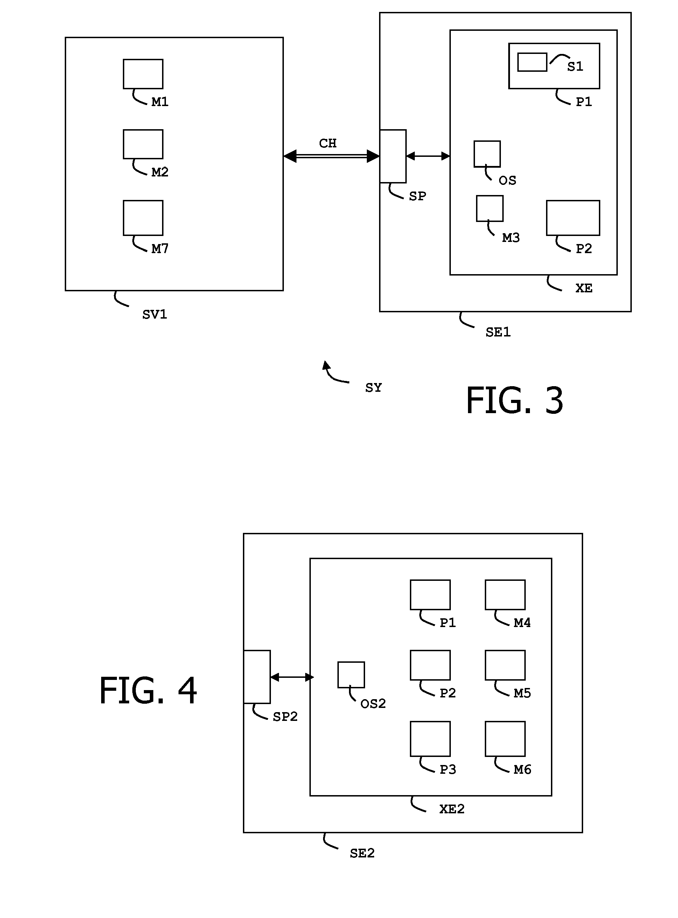

**Figure 3** shows a system SY comprising an administration entity SV1 and a token SE1 according to an example of the invention.

In this example, the administration entity SV1 is a server that comprises a checking module M1 configured to check if the profile to be activated is authorized to store data administrated by a specific trusted server which is distinct from the administration entity SV1. The checking module M1 is also configured to check if the current profile or a previously current profile contains an application (i.e. a service) installed by (or belonging to) the specific trusted server.

The administration entity SV1 also comprises a generating module M2 configured to generate a swap command C1 which requests both activation of a targeted profile and transfer of an application from the current profile (or previously activated profile) to the profile which must be activated. The generating module M2 is configured to generate the swap command C1 requesting a transfer of service only in the case where the checking made by the checking module M1 is successful. The generating module M2 is configured to generate the customary swap command in case of unsuccessful checking.

The administration entity SV1 also comprises a storing module M7 configured to store parameters reflecting a set of profiles which are authorized to store data administrated by the specific trusted server. The storing module M7 may rely on a database, a list, a file or any relevant container able to store data which identifies the set of profiles authorized to store services administrated by one or several trusted servers and the presence of such services in the profiles of the token SE1. In general, the storing module M7 manages such data for a plurality of tokens.

The token SE1 is a physical secure element of UICC type which comprises a communication interface SP and an execution component XE. The communication interface SP is configured to establish a communication channel CH with the administration entity SV1. The execution component XE comprises an operating system OS, two profiles P1 and P2 and activating module M3. The execution component XE is able to handle only one current profile at a time.

The activating module M3 is configured to perform in atomic way both the transfer of one or several applications (i.e. services) from a profile to be deactivated (or already deactivated) to a targeted profile to be activated and the activation of the targeted profile by executing the received swap command.

The administration entity SV1 and the token SE1 of the system SY are well-suited for running the method described at Figure 1.

**Figure 4** shows a token SE2 according to an example of the invention.

The token SE2 is an embedded UICC which comprises a communication interface SP2 and an execution component XE2. The communication interface SP2 is able to communicate with an administration entity through a secure channel. The execution component XE2 comprises an operating system OS2, three profiles P1, P2 and P3, a discovery module M4, an activating module M5 and a notifying module M6. The execution component XE2 is able to handle only one current profile at a time.

The discovering module M4 is configured to check if the profile to activate is authorized to store data (i.e. service) administrated by a trusted server distinct from the administration entity which manages the profiles. The discovering module M4 is also configured to check if the current profile (or a previously current profile) contains an application installed by a trusted server.

By way of illustration, every service installed into the profiles of the token can be associated with a flag or an identifier that contains the information required for the checking step. In particular, all elements (e.g. files, containers, directory structure, packages) of each service can have an additional specific field that is parsed by the discovering module M4. Such a specific field gives information about the associated trusted server and the compliance with trusted server.

Alternatively, all elements of each service may be stored using a specific naming convention allowing the discovering module M4 to identify and locate the services to move.

The activating module M5 is configured to perform in atomic way both the activation of the targeted profile and the transfer of a service administrated by a trusted server from a profile to the targeted profile which must be activated.

The notifying module M6 is configured to send to the trusted server that manages the moved service a report message TM reflecting the actual transfer of the service (i.e. the application) to the new current profile.

The token SE2 is well-suited for running the method described at Figure 2. An advantage of the token SE2 is to allow automatically moving the services which are compliant with the newly active profile while using a customary administration entity.

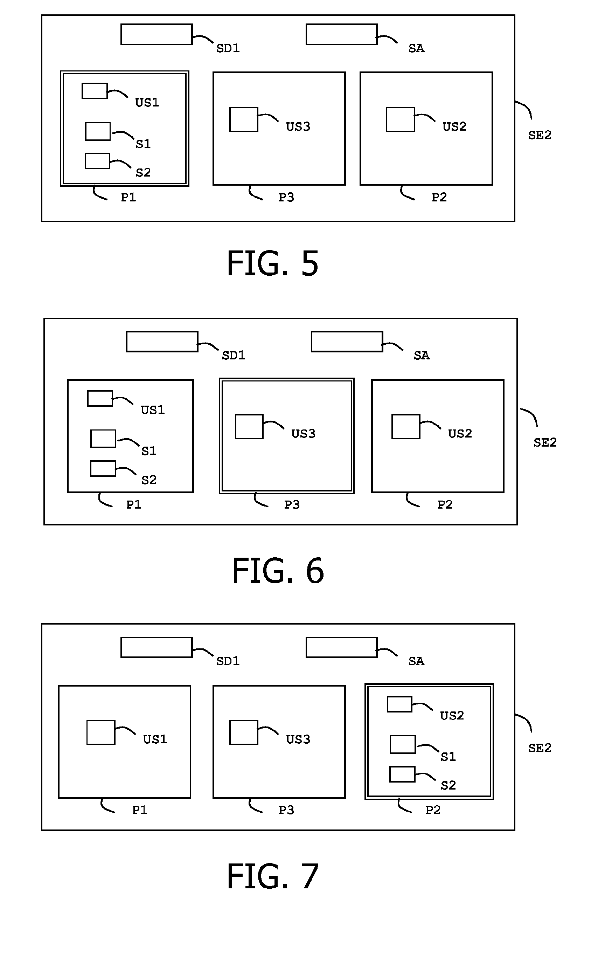

**Figure 5** shows a first state of the token SE2 according to an example of the invention.

The token SE2 is similar to the token described at Figure 4. In this example, a Security Domain (as defined by Global Platform standard (V2.2) is uniquely allocated to each profile. The security domain defines a specific container which is dedicated to one profile. Access to the security domain is securely controlled and every profile is implemented as a distinct and independent security domain.

The token SE2 comprises an Issuer Security Domain (ISD) SD1 which is managed by a remote administration entity SV1.

The profile P1 is the current profile and comprises telecom subscription data US1 related to an administration entity of a Mobile Network Operator. At Figure 5, the profile P1 is shown with a double line reflecting the fact it is the active profile.

The profile P1 comprises a payment service S1 remotely managed by a trusted entity and a loyalty service S2 remotely managed by another trusted entity.

The profile P2 comprises a telecom subscription data US2 related to the administration entity SV1. The profile P3 comprises a telecom subscription data US3 related to the administration entity SV1.

The profiles P1 and P2 may depend on two different administration entities (ASM servers) which are interconnected and communicate thanks to a notification mechanism for synchronization purpose.

The token SE2 comprises a Subscription Manager SA which is able to securely communicate with the remote administration entity SV1 and has the rights to install and activate profile in the token SE2. The Subscription Manager SA is assumed to be previously provisioned with one or several key sets needed for establishing a SCP 03 secure channel with the administration entity SV1. The Subscription Manager SA is in charge of the execution of the commands and scripts received from the remote administration entity SV1. In particular, the Subscription Manager SA is adapted to access the profiles P1, P2 and P3 for installing and removing services.

**Figure 6** shows a second state of the token SE2 according to an example of the invention.

The token SE2 is depicted in a state corresponding to a change of current profile. The profile P3 has been activated by a swap command sent by the administration entity SV1. The profile P3 is shown with a double line reflecting the fact it is now the current profile. The profile P3 is assumed not to be compliant with the services coming from the trusted entities managing services S1 and S2. Thus, according to this example, the services S1 and S2 remain in the profile P1 which is now deactivated. Consequently, the user of the token SE2 cannot access the services S1 and S2.

**Figure 7** shows a third state of the token SE2 according to an example of the invention.

The token SE2 is depicted in a state corresponding to a further change of current profile. The profile P2 has been activated by a swap command sent by the administration entity SV1. The profile P2 is shown with a double line reflecting the fact it is the current profile. The profile P2 is assumed to be compliant with the services coming from the trusted entities managing services S1 and S2. Thus, according to this example of the invention, the services S1 and S2 have been moved from the profile P1 to the profile P2. Consequently, the user of the token SE2 can now access both services S1 and S2.

Starting from the state of figure 6, when the swap command has been received by the token SE2, the token SE2 has performed a discovery step. First the token SE2 has analyzed the content of the current profile P3 and came to the conclusion that it did not contain any service which may be transferred. Then the token SE2 continued the search based on an historical list of active profile (assumed to be stored into the token) and analyzed the content of the profile P1. The token SE2 has found two services which can be transferred and has moved these services to the profile P2. By scanning the historical log from the more recent record, the token can find the most recently activated profile which comprises service to be moved.

It must be understood, within the scope of the invention, that the above-described embodiments are provided as non-limitative examples. In particular, the token may be any secure element which has the capability to act as an UICC.

## Claims

1. A **method** for managing subscription in a token (SE1) acting as an UICC, comprising first and second profiles (P1, P2) and able to handle only one active profile at a time, said first and second profiles (P1, P2) being administrated by a first server (SV1),
**characterized in that** said method comprises the steps:
- when an activation of said second profile (P2) is needed, checking if said second profile (P2) is authorized to store data administrated by a trusted server (SV2) distinct from the first server (SV1) and if said first profile (P1) contains an application (S1) installed by the trusted server (SV2),
- in case of successful checking, performing in atomic way both the transfer of the application (S1) from said first profile (P1) to said second profile (P2) and the activation of said second profile (P2).

2. A method according to claim 1, wherein the checking step is performed at the first server (SV1), wherein in case of successful checking the first server (SV1) generates a single swap command (C1) requesting both activation of said second profile (P2) and transfer of the application (S1) from said first profile (P1) to said second profile (P2) and wherein the first server (SV1) sends the swap command (C1) to the token (SE1).

3. A method according to claim 2, wherein the first server (SV1) is notified of the presence of the application (S1) in the first profile (P1).

4. A method according to claim 1, wherein the first server (SV1) generates and sends to the token (SE1) a swap command (C2) requesting the activation of the second profile (P2) and wherein the checking step is performed at the token (SE1).

5. A method according to claim 1, wherein the token (SE1) comprises more than two profiles and wherein the method comprises the further steps:
- in case of unsuccessful checking, searching for the profile that was most recently activated and which is authorized to store data administrated by the trusted server (SV2) and which contains the application (S1),
- in case of successful searching, performing in atomic way both the transfer of the application (S1) to the second profile (P2) and the activation of the second profile (P2).

6. A method according to claim 1, wherein the token (SE1) sends to the trusted server (SV2) a report message (TM) reflecting the actual transfer of the application (S1) to the second profile (P2).

7. A **token** (SE2) acting as an UICC and able to handle only one active profile at a time and comprising first and second profiles (P1, P2) administrated by a first server (SV1),
**characterized in that** said token (SE2) comprises a discovering module (M4) configured to check if said second profile (P2) is authorized to store data administrated by a trusted server (SV2) distinct from the first server (SV1) and if said first profile (P1) contains an application (S1) installed by the trusted server (SV2)
and **in that** said token (SE2) comprises an activating module (M5) configured to perform in atomic way both the transfer of the application (S1) from said first profile (P1) to said second profile (P2) and the activation of the second profile (P2) only in the case where the checking made by the discovering module (M4) is successful.

8. A token (SE2) according to claim 7, wherein said token (SE2) comprises a notifying module (M6) configured to send to the trusted server (SV2) a report message (TM) reflecting the actual transfer of the application (S1) to the second profile (P2).

9. A **system** (SY) comprising a first server (SV1) and a token (SE1) which acts as an UICC, includes first and second profiles (P1, P2) and is able to handle only one active profile at a time, said first and second profiles (P1, P2) being administrated by the first server (SV1),
**characterized in that** said first server (SV1) comprises a checking module (M1) configured to check if said second profile (P2) is authorized to store data administrated by a trusted server (SV2) distinct from the first server (SV1) and if said first profile (P1) contains an application (S1) installed by the trusted server (SV2),
**in that** said first server (SV1) comprises a generating module (M2) configured to generate a single swap command (C1) requesting both activation of said second profile (P2) and transfer of the application (S1) from said first profile (P1) to said second profile (P2) only in the case where the checking made by the checking module (M1) is successful
and **in that** said token (SE1) comprises an activating module (M3) configured to perform in atomic way both the transfer of the application (S1) from said first profile (P1) to said second profile (P2) and the activation of said second profile (P2) by executing the swap command (C1).

10. A system according to claim 9, wherein the first server (SV1) comprises a storing module (M7) configured to store parameters reflecting a set of profiles which are authorized to store data administrated by the trusted server (SV2).
